# EUROPEAN PATENT APPLICATION

(11) **EP 4 574 317 A1**
(43) Date of publication of application: **25.06.2025**
(21) Application number: 23219150.2
(22) Date of filing: 21.12.2023
(51) Int. Cl.: B23B 29/04, B23B 27/10, B23B 27/16

(54) **A TURNING TOOL FOR METAL CUTTING**

(71) Applicant: AB Sandvik Coromant, 811 81 Sandviken (SE)
(72) Inventor: ENGSTRÖM, Tord, 811 81 Sandviken (SE)
(74) Representative: Sandvik

(57) **Abstract**

The turning tool comprises a tool body (110; 110, 120) having an insert seat (105) positioned at a front (FE) end of a top surface (114), a clamping mechanism (135), a nozzle unit (151) for directing a coolant fluid towards a cutting insert (130) mounted is the insert seat (105) and a through hole (156) which extends from the top surface (114) to a bottom surface (113). The nozzle unit (151) - separate from the clamping mechanism (135) - is removably received in the through hole (156) and can protrude from the top surface (114).

## Description

### TECHNICAL FIELD

The invention relates to a turning tool for metal cutting.

### BACKGROUND

US 2019/0160549 discloses a turning tool comprising a fastener for securing together a clamp and a tool body for clamping a turning insert in an insert pocket. The fastener extends through a hole in the clamp and into a threaded hole in the tool body. The fastener has a male thread and is screwed into the threaded hole in the tool body for clamping the turning insert under the clamp in the insert pocket. The fastener has an internal coolant channel which comprises several openings located in a head of the fastener. The clamp has an internal coolant channel that has an exit opening close to the edge of a clamped turning insert. In certain angular positions of the fastener, one of the openings in the head is aligned with the internal coolant channel in the clamp for establishing fluid communication between the two coolant channels and directing coolant to the turning insert. A problem with this known turning tool is that the position of the exit opening is limited to the design and dimensions of the clamp.

### SUMMARY

It is an object of the present invention to at least partly obviate the above-mentioned problem. This object is achieved according to the invention by means of a turning tool as defined in claim 1.

An inventive turning tool for metal cutting comprises:
- a tool body having a top surface and a bottom surface;
- an insert seat positioned at a front end of the top surface, which insert seat is arranged to accommodate a cutting insert;
- a clamping mechanism, which is arranged to hold the cutting insert in the insert seat;
- a nozzle unit being arranged for directing a coolant fluid towards the cutting insert when the cutting insert is mounted in the insert seat;
- a through hole which extends from the top surface to the bottom surface;
- the through hole is positioned separately from the clamping mechanism; wherein
- the nozzle unit, which is separate from the clamping mechanism, and removably received in the through hole, and which has a mounted state, wherein, when the nozzle unit is in the mounted state, a top portion of the nozzle unit protrudes from the top surface.

By arranging the nozzle unit separately from the clamping mechanism a more versatile turning tool is achieved. The nozzle unit is arranged separately from the clamping mechanism by positioning the nozzle unit at the top surface in the through hole. The through hole is arranged to accommodate the nozzle unit in a mounted state of the nozzle unit wherein the top portion of the nozzle unit protrudes from the top surface at a distance from the clamping mechanism. Preferably, the through hole accommodate the nozzle unit in a mounted state of the nozzle unit and the top portion of the nozzle unit protrudes from the top surface at a distance from the cutting insert and more preferably from a cutting insert when held in the insert seat. Thereby, advantageously the through hole may be positioned and oriented in a number of different ways without being restricted to the clamp. For example, the turning tool may be designed so as to provide a nozzle unit being positioned at the top surface taking specific turning applications and/or various cutting inserts into account. Hereby a tailor made turning tool may be provided. Hereby, unlike in prior art, the top portion of the nozzle unit may protrude at a position at the top surface which is less subjected to wear from chips during a turning operation. The nozzle unit may hereby also be better protected from heat generated during the turning operation. By arranging the nozzle unit separately from the clamping mechanism increased operational life time of the turning tool and/or the cutting insert may be achieved. The through hole may be drilled. This is a rather easy method of manufacturing the turning tool. Hereby a cost-effective manufacturing method of the turning tool is provided.

The through hole is extending between the top surface and the bottom surface and has open ends at the top surface and the bottom surface, respectively. The top surface may be a flat surface. The bottom surface may be a flat surface. Alternatively, the top surface and/or the bottom surface may be curved. Hereby the proposed turning tool is not limited by its design at a front end of the turning tool.

Advantageously the nozzle unit is removably received in the through hole. Hereby the nozzle unit is easy to replace when required. Replacement may be needed due to wear or use for a specific turning operation. Mounting of the nozzle unit in the through hole in the tool body is quick and easy, which in turn may shorten downtime of the turning machine being equipped with the turning tool.

Advantageously the turning tool easily may be adapted for different turning operations due to the removably received nozzle unit with no need to add costly additional components to the turning tool.

The nozzle unit may be manufactured by AM (Additive Manufacturing). Hereby the nozzle unit may be designed with small dimensions. The nozzle unit may thus be less exposed to negative impact from removed chips and heat compared to larger nozzle units of prior art. Advantageously the nozzle unit consists of a wear resistant material. The nozzle unit may consist of hard metal. The nozzle unit may consist of Stellite. The nozzle unit may consist of high speed steel. The nozzle unit may consist of any suitable steel alloy. The nozzle unit may consist of stainless steel.

The nozzle unit of the proposed turning tool may be chosen considering which specific turning operation is to be performed. The nozzle unit may be chosen considering which kind of cutting insert is used. Advantageously the nozzle unit may be removed and replaced by a better suited nozzle unit when changing turning operation and/or the cutting insert.

Efficient cooling of the cutting insert is achieved independently of which clamping mechanism is provided.

According to at least one embodiment, the through hole has an inlet for receiving coolant fluid and the nozzle unit has an inlet for receiving coolant fluid, which inlet is in fluid communication with the through hole. Herein, when depicted that two hollow spaces, such as coolant fluid passages or the through hole, are in fluid communication it should be understood that there is a fluid connection between the two. Herein, when depicted that an inlet or outlet is in fluid communication with a hollow space, such as coolant fluid passages or the through hole, it should be understood that there is a fluid connection between the two. Herein the term "being in fluid communication" is synonymous with "being in fluid connection". A coolant fluid passage may be provided, wherein one end of the coolant fluid passage is in fluid communication with a coolant fluid supply system and the other end is forming the inlet of the through hole. The coolant fluid passage may be drilled in the tool body. According to this example coolant fluid is effectively conveyed via the through hole to coolant fluid outlets of the nozzle unit.

According to at least one embodiment, a sealing member is arranged to seal the through hole at the bottom surface in a fluid tight manner. The sealing member may hereby efficiently uphold a coolant fluid pressure within the tool body during turning operations and further prevent leakage of the coolant fluid. The sealing member hereby may uphold proper operation of the turning tool regarding cooling efficiency.

According to at least one embodiment, the sealing member has an external thread and the through hole has an internal thread at a close proximity of the bottom surface, wherein the sealing member is arranged to seal the through hole at the bottom surface in a fluid tight manner by screw connection of the external thread of the sealing member with the internal thread of the through hole. Hereby a robust and simple to use solution is provided. An operator may according to this example simply screw the sealing member into an opening of the through hole at the bottom surface to achieve said sealing. This is a cost-effective mechanism for achieving said sealing.

According to one example the sealing member may comprise a separate sealing unit, such as a rubber component, for increasing sealing capacity even further.

According to at least one embodiment, an intermediate member has a longitudinal extension and, in the mounted state of the nozzle unit, is in contact with the nozzle unit at one end thereof and in contact with the sealing member at the other end thereof. Hereby a robust and cost effective mounting of the nozzle unit to the mounted state is provided.

According to one example, a kit of parts comprising the nozzle unit, the intermediate member and the sealing member is herein referred to as a coolant nozzle configuration.

According to one example, a kit of parts comprising the nozzle unit and the sealing member is herein referred to as a coolant nozzle configuration. According to this example the sealing member is arranged to directly contact the nozzle unit and exert a force on the nozzle unit for achieving the mounted state of the nozzle unit.

According to one example, the intermediate member is fixedly connected to either the nozzle unit or the sealing element. This is to allow the sealing member to be rotated during application of the screw connection of the external thread of the sealing member with the internal thread of the through hole. According to one example the intermediate member is neither fixedly connected to the nozzle unit nor the sealing element.

According to at least one embodiment, the intermediate member is resilient and arranged to pre-stress the nozzle unit toward the mounted state of the nozzle unit. The intermediate member may consist of a plastic material. The intermediate member may consist of rubber. The intermediate member may consist of any suitable resilient material. According to one example the intermediate member consists of a metal and being formed in a way for pre-stressing the nozzle unit toward the mounted state of the nozzle unit. The intermediate member may provide a flexible structure for pre-stressing the nozzle unit toward the mounted state of the nozzle unit.

According to at least one embodiment, the resilient intermediate member is a helical spring being arranged to pre-stress the nozzle unit toward the mounted state of the nozzle unit. The helical spring is a cheap component and hereby a cost-effective solution for pre-stressing the nozzle unit toward the mounted state of the nozzle unit is achieved. The helical spring is easy to mount in the through hole. It may simply be introduced manually by an operator of the turning machine. By subsequently mounting the sealing member the helical spring is pre-stressing the nozzle unit toward the mounted state of the nozzle unit.

According to at least one embodiment, the intermediate member is rigid. This provides an alternative variant to the resilient intermediate member. The rigid intermediate member is hereby arranged to exert a pressing force to the nozzle unit toward the mounted state of the nozzle unit. The pressing force is applied by the sealing member to the rigid intermediate member and transferred to the nozzle unit. A resilient intermediate member may be deteriorated over time, i.e. loosing stiffness. For example, a spring constant of the helical spring may change over time why the helical spring may need to be replaced. According to the proposed turning tool this is easily performed. However, when using a rigid intermediate member replacement of the intermediate member should not be necessary.

According to at least one embodiment, the rigid intermediate member is a cylindrical hollow element provided with at least one through hole in a peripherical surface thereof for allowing a coolant fluid flow into the inlet of the through hole, wherein an inlet of the nozzle unit is in fluid communication with a hollow space of the cylindrical hollow element. The rigid cylindrical hollow element is hereby arranged to exert a pressing force to the nozzle unit toward the mounted state of the nozzle unit. The pressing force is applied by the sealing member to the rigid cylindrical hollow element and transferred to the nozzle unit. The at least one through hole in the peripherical surface is easy to manufacture. This may be performed by drilling. The at least one through hole in the peripherical surface may be formed so as to fit with the coolant fluid inlet of the through hole, which will allow efficient flow of the coolant flow towards the inlet of the nozzle unit and into the nozzle unit for distribution to the cutting insert.

According to one example the intermediate member is an elongated element, such as a rod. This is a cheap component which also allow efficient flow of the coolant fluid received via the inlet of the through hole and conveyed towards the inlet of the nozzle unit and into the nozzle unit for distribution to the cutting insert. The elongated element may be a resilient element, whereby the elongated resilient element is arranged to pre-stress the to the nozzle unit toward the mounted state of the nozzle unit. Alternatively, the elongated element is rigid, whereby the elongated rigid element is arranged to exert a force on the nozzle unit thereby pressing the nozzle unit toward the mounted state of the nozzle unit.

According to at least one embodiment, an angle between a longitudinal central axis of the through hole and a plane defined by a bottom surface of the insert seat is 45-90 degrees. The positioning and orientation of the through hole may thus be selected before manufacturing the tool body. This solution advantageously provides versability compared to prior art cooling arrangements. Adapted design of the nozzle unit and potentially the sealing member may be required. For example, a bottom portion of the nozzle unit may be formed so as to provide the nozzle unit having a longitudinal central axis being oriented perpendicular to the plane defined by the bottom surface of the insert seat in the mounted state of the nozzle unit.

According to at least one embodiment, an angle between a longitudinal central axis of the through hole and a plane defined by a bottom surface of the insert seat is preferably 90 degrees. Hereby easy mounting of the nozzle unit is achieved. According to one example the bottom portion of the nozzle unit is formed rotational symmetrical, whereby a simplified manufacturing process may be achieved.

According to at least one embodiment, the nozzle unit is additive manufactured (AM), having a protruding height measured in a direction parallel to a longitudinal central axis of the coolant nozzle configuration central axis, which protruding height is between 5mm and 10mm. Advantageously, by providing an AM nozzle unit the component may be relatively small. By providing a relatively small AM nozzle unit deterioration of the nozzle unit caused by exposure to removed chips and heat generated during turning operations may be reduced. According to one example the sealing member may be additive manufactured. According to one example the intermediate member may be additive manufactured.

According to at least one embodiment, the nozzle unit has a number of coolant fluid outlets, each configured to directly or indirectly direct pressurized coolant fluid toward at least one predetermined portion of the cutting insert when mounted in the insert seat. By providing a number of coolant fluid outlets efficient cooling of the cutting insert is achieved. Each of the coolant fluid outlets may be arranged to direct coolant fluid towards a predetermined portion of the cutting insert, such as a portion of a cutting edge of the cutting insert. Each of the coolant fluid outlets may be arranged to direct coolant fluid towards a predetermined portion of the tool body, e.g. a portion in close proximity of the cutting insert. Each of the coolant fluid outlets may be arranged to direct coolant fluid towards the workpiece. Each of the coolant fluid outlets may be arranged to direct coolant fluid towards a portion of the tool body in a close proximity of the cutting insert.

According to at least one embodiment, the nozzle unit is introducible through an opening in the bottom surface, wherein the nozzle unit is axially movable in the through hole to the mounted state of the nozzle unit. Hereby simple and time-efficient mounting of the nozzle unit is achieved. An operator may introduce the nozzle unit by any suitable tool and put the nozzle unit in position so that a top portion of the nozzle unit is protruding from the top surface. Subsequently the intermediate member may be introduced in the through hole and lastly the sealing member is mounted. Hereby the nozzle unit is mounted in the mounted state of the nozzle unit.

According to at least one embodiment, the nozzle unit is axially movable by being slidable along a longitudinal center axis of the through hole towards and away from the mounted state of the nozzle unit. By moving the nozzle unit axially from the mounted state toward the bottom surface mounting of a first tool body portion to a second tool body portion is facilitated. According to an example the first tool body portion, having the insert seat, is fastened to the second tool body portion by means of screws. An operator may hereby manually press down the protruding top portion of the nozzle unit towards the bottom surface and get room for maneuver.

According to at least one embodiment, the nozzle unit has a shoulder and the through hole has an abutment surface, and wherein the shoulder abuts against the abutment surface when the nozzle unit is in the mounted state. Hereby the shoulder and the abutment surface are arranged to seal the through hole at the top surface in a fluid tight manner, when the nozzle unit is in the mounted state. The mounted state may be achieved by pre-stressing the nozzle unit against the abutment surface by the resilient intermediate member. The mounted state may be achieved by pressing the nozzle unit against the abutment surface by a force provided by a rigid intermediate member and the sealing member. The shoulder of the nozzle unit is radially protruding at a bottom portion of the nozzle unit. The shoulder has an upward facing surface which is arranged to be in fluid tight contact with a downward facing surface of the top surface in the mounted state of the nozzle unit.

According to an example a sealing member is arranged about the nozzle unit and in contact the upward facing surface of the nozzle unit. The sealing member may be made of rubber. The sealing member has according to an example a cylindrical shape. The sealing member may be an O-ring. The sealing member is, in the mounted state of the nozzle unit, arranged between upward facing surface of the nozzle unit and the abutment surface of the top surface.

According to at least one embodiment, the nozzle unit and the through hole at the top surface are such dimensioned that, when the nozzle unit is in the mounted state, rotational movement of the nozzle unit about a longitudinal center axis of the through hole is prevented. Hereby the nozzle unit is arranged in a fixed position wherein coolant fluid outlets of the nozzle unit are positioned in a proper manner, i.e. so as to direct coolant fluid towards the workpiece, cutting insert or the tool body. According to an example, the protruding portion of the nozzle unit, seen in a top view, is elliptical or stadium-shaped. Hereby correct positioning of the nozzle unit at the top surface is facilitated.

According to at least one embodiment, the turning tool comprises a coolant fluid passage upstream the through hole. The coolant fluid passage is in fluid communication with the through hole. The coolant fluid passage is arranged to convey coolant fluid for distribution by the nozzle unit. A coolant supply system is arranged to supply coolant fluid for distribution by the nozzle unit, wherein the coolant fluid is pressurized to preferably 70-200 bar. Hereby efficient cooling of any of the workpiece, cutting insert and the tool holder is provided. According to another example the coolant supply system is arranged to supply coolant fluid for distribution by the nozzle unit, wherein the coolant fluid is pressurized to 20-600 bar.

Commonly the coolant fluid is a liquid but gas, such as air, may be used in some cutting operations. This provides a versatile application of coolant fluid for cooling of any of the workpiece, cutting insert and the tool holder.

### BREIF DESCRIPTION OF THE FIGURES

The present invention will now be explained in more detail by a description of embodiments of the invention and by reference to the accompanying drawings.
Figures 1a and 1b schematically illustrate a perspective view of a turning tool having a coolant nozzle configuration;
Figure 2 schematically illustrates a cross-sectional view of a first turning tool body;
Figure 3 schematically illustrates a side view of a first tool turning tool body;
Figure 4 schematically illustrates a cross-sectional view of a first turning tool body;
Figures 5a, 5b, 5c schematically illustrate a side view, a perspective view and an exploded view of a coolant nozzle configuration, respectively, according to an embodiment;
Figures 6a, 6b, 6c schematically illustrate a side view, a perspective view and an exploded view of a coolant nozzle configuration, respectively, according to an embodiment;
Figures 7a, 7b schematically illustrate a perspective view and a side view, respectively, of a coolant nozzle unit;
Figures 8a, 8b schematically illustrate a perspective view and a side view, respectively, of a coolant nozzle unit;
Figures 9a, 9b schematically illustrate a perspective view and a side view, respectively, of a coolant nozzle unit;
Figures 10a, 10b schematically illustrate a perspective view and a side view, respectively, of a coolant nozzle unit;
Figures 11a, 11b schematically illustrate a perspective view and a side view, respectively, of a coolant nozzle unit;
Figures 12a, 12b, 12c schematically illustrate a cross-sectional view, side view and top view, respectively, of a coolant nozzle unit; and
Figures 13a, 13b schematically illustrate a top view and a perspective view, respectively, of a first turning tool body.

### DETAILED DESCRIPTION OF THE FIGURES

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

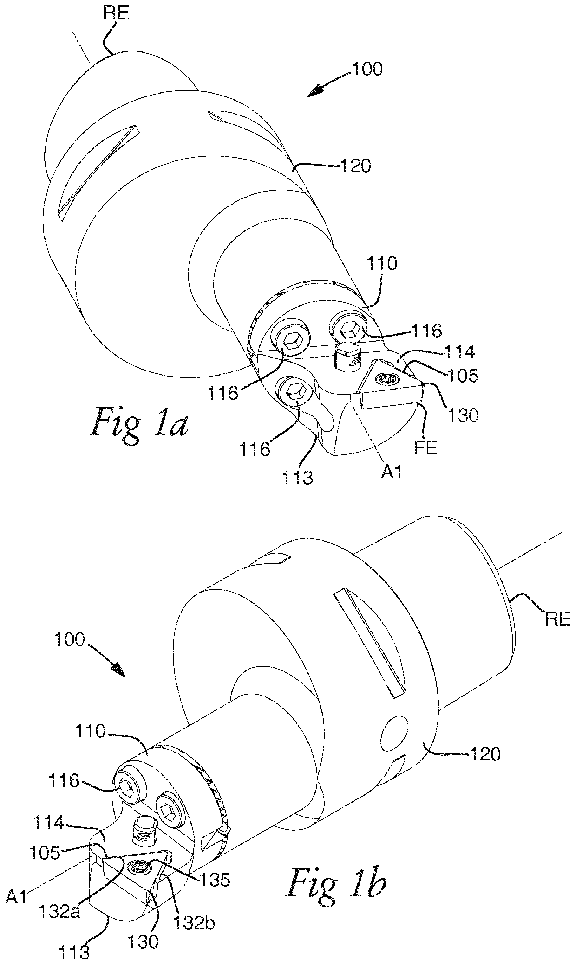

With reference to Figure 1a and Figure 1b a turning tool 100 is schematically illustrated.

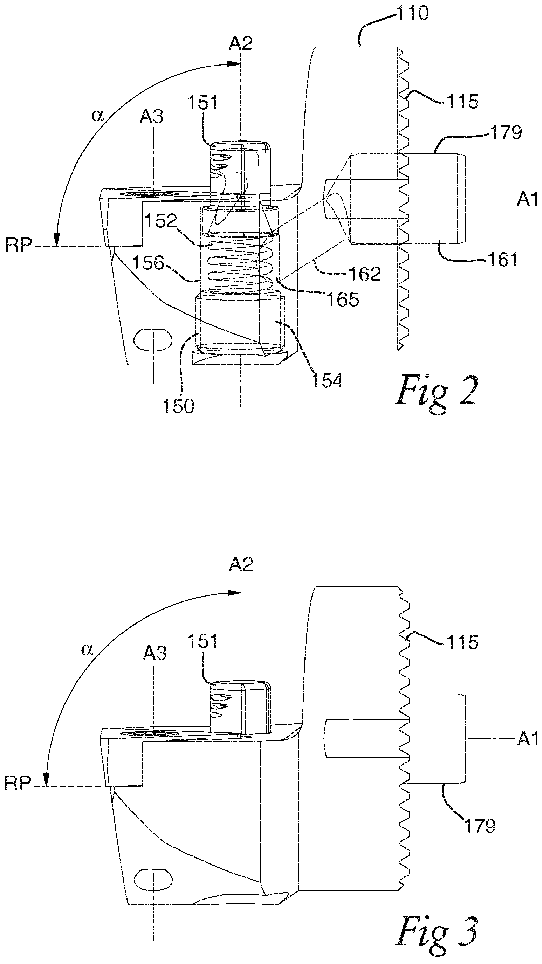

According to one embodiment a turning tool 100 comprises a first turning tool body 110 and a second turning tool body 120. The first turning tool body 110 and the second turning tool body 120 are attached to each other. According to this embodiment the combination of the first turning tool body 110 and the second turning tool body 120 is referred to as turning tool 100. According to one example the first turning tool body 110 is referred to as turning tool 100. The turning tool 100 has a front end FE, also referred to as a first distal end. The turning tool 100 has a rear end RE, also referred to as a second distal end. The front end FE and the rear end RE are arranged opposite to each other. A longitudinal axis A1 extends from the rear end RE to the front end FE. The second turning tool body 120 is arranged to, at the rear end RE thereof, be detachably connected to a turning machine (not shown), such as a CNC-lathe. The second turning tool body 120 is arranged to be detachably connected to the turning machine by any suitable fastening means. The rear end RE is according to one example arranged in the form of a coupling portion. The coupling portion is removably connectable to the CNC-lathe, more specifically to a machine interface of the CNC-lathe, such as a machine spindle or a tool revolver turret or a tool post. The first turning tool body 110 has a coupling portion 179 (Figure 2) which is arranged for connecting the first turning tool body 110 and the second turning tool body 120.

Herein the description of the turning tool 100 is mainly made with reference to the embodiment comprising the first turning tool body 110 and the second turning tool body 120.

According to one embodiment the turning tool 100 is manufactured as one single solid unit, such as a boring bar. According to this embodiment the single solid unit is also referred to as turning tool 100.

The turning tool 100 is for a CNC-lathe i.e. a computer- or computerized numerical control lathe, i.e. any CNC-machine suitable for turning such as e.g. a turning lathe, a multitask machine or a sliding head machine. The turning tool 100 is for machining a metal workpiece, such as a metal workpiece comprising an external surface, which is a radially outer surface, where the radially outer surface is facing away from a rotational axis around which the metal workpiece is rotatable. The turning tool 100 is according to an example for turning of said radially outer surface, i.e. external turning. According to another example the turning tool 100 is for internal turning.

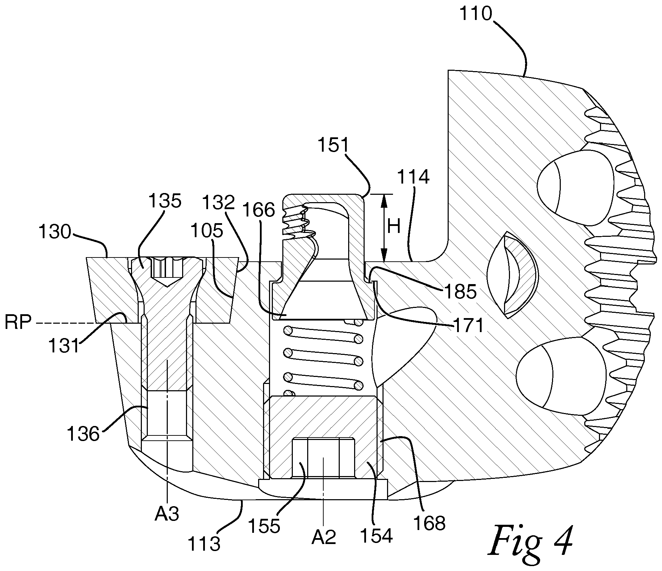

The turning tool 100 comprises a seat 105, or pocket, for a cutting insert 130. The cutting insert 130 is also referred to as turning insert. The seat 105 and the cutting insert 130 are provided at the front end FE of the turning tool 100. The seat 105 comprises a bottom support surface 131 (Figure 4) and a first insert seat side surface 132a and second insert seat side surface 132b. The bottom support surface 131 is arranged for contact with a bottom surface of the turning insert 130. The first insert seat side surface 132a and the second insert seat side surface 132b form an acute angle. The first insert seat side surface 132a form an angle to the bottom support surface 131. This angle is according to an example 90 degrees. The second insert seat side surface 132a form an angle to the bottom support surface 131. This angle is according to an example 90 degrees. It should however be noted that the inventive turning tool 100 may be arranged to hold different cutting inserts, and the geometry of the insert seat 105 of the turning tool 100 is designed to accommodate the specific cutting insert 130.

The cutting insert 130 may be fastened to the first turning tool body 110 by any suitable clamping mechanism. According to one example, which is illustrated in e.g. Fig. 1b and Fig. 4, the cutting insert 130 is fastened to the first turning tool body 110 by screw connection of an external thread of a screw 135 with an internal thread of a hole 136 in the bottom support surface 131. According to another example (not illustrated) the cutting insert 130 is fastened to the first turning tool body 110 by means of a clamp. The clamp is arranged to detachably secure the cutting insert 130 in position in the insert seat 105 for allowing metal cutting operations. The clamp may be in the form of a top clamp. Herein any device/configuration/means being arranged to hold the turning insert in the insert seat 105 is denoted clamping mechanism.

The cutting insert 130 is made from a wear resistant material, such as cemented carbide. The first turning tool body 110 and the second turning tool body 120 are preferably made from steel. A top surface of the cutting insert 130 is suitable to function as a rake face and may comprise chip breaking means such as protrusions and/or depressions to enhance chip breaking or chip control. The top surface is also denoted a first side of the cutting insert 130. A bottom surface of the cutting insert 130 comprises a contact surface or a seating surface, suitable to be in contact with the bottom support surface 131 of the insert seat 105. The bottom surface of the cutting insert 130 is also denoted a second side of the cutting insert 130. The top and bottom surfaces of the cutting insert 130 may be identical or substantially identical, such that the cutting insert 130 is reversable. The top and bottom surfaces are connected by a circumferential side surface 132, which functions as a clearance surface and as a contact surface or a seating surface, i.e. suitable to be in contact with the insert seat side surfaces 132a, 132b. A cutting edge is formed at the border between the circumferential side surface 132 and the top surface of the cutting insert 130. Said cutting edge may be circumferential and comprises a plurality of edge portions. The term "cutting edge" as used herein, if not specified otherwise, should be understood as the combination of the cutting edge segments that together form a complete cutting edge, potentially comprising multiple cutting edge segments such as a nose cutting edge, a primary cutting edge and a secondary cutting edge. According to the present disclosure, a cutting insert having exactly three cutting edges will be indexable three times, and each cutting edge may include not only a nose cutting edge, but also a primary cutting edge as well as a secondary cutting edge, wherein the primary cutting edge extends from one end of the nose cutting edge and the secondary cutting edge extends from the other end of the nose cutting edge. Thus, the cutting insert 130 may have a first cutting edge including a first primary cutting edge, a first secondary cutting edge and a first nose cutting edge, and a second cutting edge including a second primary cutting edge, a second secondary cutting edge and a second nose cutting edge, and a third cutting edge including a third primary cutting edge, a third secondary cutting edge and a third nose cutting edge.

The cutting insert 130 is polygon shaped in a top view. The cutting insert 130 is according to the illustrated example triangular in a top view. The cutting insert 130 may according to one example be of rhombic shape or substantially rhombic shape in top view. For example, the periphery of the cutting insert 130 may in a top view comprise a plurality of linear segments. If the longest of said linear segments form a rhombic shape, then the cutting insert 130 can be considered to have a rhombic shape or substantially rhombic shape.

The first turning tool body 110 is at a rear end thereof arranged with a number of through holes extending parallel with the longitudinal axis A1. The first turning tool body 110 is arranged to be detachably fastened to the second turning tool body 120 by screw connection of external thread of screws 116 with an internal thread of corresponding holes arranged in the second turning tool body 120.

The first turning tool body 110 may alternatively be detachably fastened to the second turning tool body by any suitable means, such as a locking mechanism or by a clamping mechanism.

A peripherical top surface 114 of the first turning tool body 110 is according to an example flat or substantially flat. According to this example the peripherical top surface 114 is parallel to the top surface of the cutting insert 130 being in a mounted state. According to this example the peripherical top surface 114 is parallel to the bottom support surface 131 of the insert seat 105. Alternatively the peripherical top surface 114 of the first turning tool body 110 is curved or has any suitable form. The peripherical top surface 114 is also referred to as top surface 114.

A peripherical bottom surface 113 of the first turning tool body 110 is according to an example flat or substantially flat. According to this example the peripherical bottom surface 113 is curved. The peripherical bottom surface 113 may have any suitable form. The peripherical bottom surface 114 is also referred to as bottom surface 114.

Figure 2 schematically illustrates the first turning tool body 110 in a cross-sectional view.

A reference plane RP of the turning tool 100 is defined by a plane in which the bottom support surface 131 of the insert seat 105 generally extend. The reference plane RP is hereby parallel with a plane through the geometric center of the cutting insert 130 being in a mounted state, and perpendicular to first and second planes in which the respective first and second sides of the insert seat 105 generally extend. The cutting insert 130 comprises a through hole that opens in the first and second sides and that can be used for fastening the cutting insert 130 within the insert seat 105 of the first turning tool body 110 using a clamping mechanism. The clamping mechanism may be any mechanism being arranged to hold the cutting insert 130 in the insert seat 105.

The clamping mechanism may be any holding mechanism being arranged to hold the cutting insert 130 in the insert seat 105. The clamping mechanism is a holding mechanism being arranged to hold the cutting insert 130 in the insert seat 105. The clamping mechanism may be any mechanism being arranged to lock the cutting insert 130 in the insert seat 105. The clamping mechanism is a locking mechanism being arranged to lock the cutting insert 130 in the insert seat 105. The terms "clamping mechanism", "holding mechanism" and "locking mechanism" are herein used interchangeably. According to an example, the clamping mechanism, also denoted holding mechanism or locking mechanism, comprises a clamp. According to an example, the clamping mechanism, also denoted holding mechanism or locking mechanism, comprises a wedge. According to an example, the clamping mechanism, also denoted holding mechanism or locking mechanism, comprises a screw with external thread.

The clamping mechanism according to this embodiment comprises a screw 135 (Figure 1b and Figure 4). It s illustrated a rearward surface 115 which is formed at a rear end of the first turning tool body 110, i.e. at an opposite end to the front end FE of the first turning tool body 110. The rearward surface 115 is arranged to be attached to a front end surface of the second turning tool body 120, i.e. at an opposite end to the rear end RE of the second turning tool body 120. Any suitable means for attaching the first turning tool body 110 to the second turning tool body 120 may be provided. According to an example a number of screws 116 is used for attaching the first turning tool body 110 to the second turning tool body 120. Hereby holes in the second turning tool body 120 have internal thread. The holes in the second turning tool body 120 are arranged to receive the screws 116. The first turning tool body 110 is attached to the second turning tool body 120 by screw connection of external thread of the screws 116 with an internal thread of the holes in the second turning tool body 120.

The through hole of the cutting insert 130 may extend along a central axis A3 of the cutting insert 130 and may be circular in cross sections. The central axis A3 is perpendicular to the reference plane RP. According to one example the cutting insert 130 is attached to the first turning tool body 110 by the screw 135 positioned in the through hole of the cutting insert 130 and by screw connection of external thread of the screw 135 with an internal thread of a hole 136 arranged in the first turning tool body 110.

The peripherical top surface 114 is according to this example parallel or substantially parallel to the reference plane RP when the cutting insert 130 is fastened in the insert seat 105.

A through hole 156 is provided in the first turning tool body 110. The through hole 156 is arranged between the peripherical top surface 114 and the peripherical bottom surface 113. Thus, the through hole 156 opens at one end thereof through the peripherical top surface 114 and through the peripherical bottom surface 113 at the other end. A longitudinal center axis A2 of the through hole 156 is illustrated.

According to one example the longitudinal center axis A2 of the through hole 156 is oriented orthogonally to the reference plane RP. According to one example the longitudinal center axis A2 of the through hole 156 is oriented orthogonally to the peripherical top surface 114.

According to other examples the longitudinal center axis A2 of the through hole 156 is oriented at an angle α to the reference plane RF. The angle α may according to one example be 45-90 degrees. Preferably, and according to the illustrated embodiment, the angle α is 90 degrees.

A coolant nozzle configuration 150 is arranged in the through hole 156. The coolant nozzle configuration 150 is depicted in greater detail with reference to e.g. Figure 4, Figure 5a-5c and Figure 6a-6c. The coolant nozzle configuration comprises a nozzle unit 151, an intermediate member 152 and a sealing member 154.

According to one example the longitudinal center axis A2 of the through hole 156 is also a longitudinal center axis of the coolant nozzle configuration 150.

A first coolant passage portion 161 is arranged internally of the first turning tool body 110. According to this example the first coolant passage 161 is extending through the coupling portion 179 of the first turning tool body 110. The first coolant passage 161 is arranged parallel with the longitudinal center axis A1 of the turning tool 100. The first coolant passage 161 is arranged to be in fluid communication with a second coolant passage 162.

According to one example a longitudinal center axis of the second coolant passage 162 is arranged at an angle relative the longitudinal center axis A1 of the turning tool 100. The first coolant passage 161 is in fluid communication with the second coolant passage 162. Hereby pressurized coolant fluid is conveyed from the first coolant passage 161 downstream to the second coolant passage portion 162.

According to at least one embodiment, the through hole 156 has an inlet 165 for receiving coolant fluid from the second coolant fluid passage portion 162. The nozzle unit 151 has an inlet for receiving coolant fluid, which inlet is in fluid communication with the through hole 156. One end of the first coolant fluid passage 161 is in fluid communication with a coolant fluid supply system and the other end is in fluid communication with the second coolant fluid passage 162.

The nozzle unit 151 of the coolant nozzle configuration 150 may be arranged to direct coolant fluid mainly towards the cutting insert 130 or the insert seat 105 for accommodating the cutting insert 130. This is where the chips are formed, and directing the coolant fluid towards such location might be beneficial for removing the chips. In other embodiments, the nozzle unit 151 of the coolant nozzle configuration 150 may be arranged to evenly distribute coolant fluid around the peripheral top surface 114 at the front end FE of the first turning tool body 110.

According to some embodiments, the turning tool 100 comprises two cutting inserts, arranged at the front end FE thereof. Even though both cutting inserts cannot be engaged simultaneously in a cutting process in, such turning tool may provide increased productivity since the cutting inserts can be used sequentially in a cutting process, potentially reducing the number of tool changes required to machine a certain geometry. For such embodiments, the nozzle unit 151, if not arranged to evenly distribute coolant, may be configured to provide coolant in two specific directions, e.g. towards each of the two cutting inserts. According to other embodiments, the first turning tool body 110 may include two separate coolant nozzle configurations 150, within two independently arranged through holes 156, wherein one coolant nozzle configuration 150 is arranged to provide coolant fluid towards one of the cutting inserts, and the other coolant nozzle configuration 150 is arranged to provide coolant fluid towards the other cutting insert.

With reference to Figure 3 the first turning tool body 110 is illustrated in a side view.

The longitudinal axis A1 extends from the rear end RE of the turning tool 100 to the front end FE of the turning tool 100. A longitudinal center axis of the through hole 156 is denoted longitudinal center axis A2. A longitudinal center axis A2 of the through hole 156 is also a longitudinal center axis of the coolant nozzle configuration 150 being in the mounted state. A longitudinal center axis of the hole 136 is denoted longitudinal center axis A3. A screw 135 is arranged to hold the cutting insert 130 in the insert seat 105. Hereby a screw connection of an external thread of the screw 135 with an internal thread of the hole 136 is achieved. The longitudinal center axis A3 of the hole 136 is also a longitudinal center axis of the screw 135 when being in a state of holding the cutting insert 130. A reference plane RP is coinciding with a plane in which the bottom support surface 131 of the insert seat 105 generally extends.

It is illustrated that the longitudinal axis A1 is parallel to the reference plane RP. It is illustrated that the longitudinal axis A1 is perpendicular to the longitudinal central axis A2. It is illustrated that the longitudinal axis A1 is perpendicular to the longitudinal central axis A3. It is illustrated that the longitudinal central axis A2 is perpendicular to the reference plane RP. It is illustrated that the longitudinal central axis A3 is perpendicular to the reference plane RP. It is illustrated that the longitudinal central axis A2 is parallel to the longitudinal central axis A3.

According to an example, an angle α between the longitudinal central axis A2 of the through hole 156 and the reference plane RP defined by the bottom support surface 131 of the insert seat is 45-90 degrees. According to an example the angle α between the longitudinal central axis A2 of the through hole 156 and the reference plane RP plane defined by the bottom surface 131 of the insert seat is 30-60 degrees. Preferably, the angle α between the longitudinal central axis A2 of the through hole 156 and the reference plane RP plane is 90 degrees.

With reference to Figure 4 the first turning tool body 110 is schematically illustrated in a cross-sectional view.

The through hole 156 is extending from the top surface 114 to the bottom surface 113. The through hole 156 is extending at one end thereof through the top surface 114. The through hole 156 is extending at the other end thereof through the bottom surface 113. According to this example the angle α between the longitudinal central axis A2 of the through hole 156 and the reference plane RP plane is 90 degrees.

The through hole 156 has an inlet 165 arranged in fluid communication with the second coolant fluid passage 162, which in turn is arranged in fluid communication upstream with the first coolant fluid passage 161. The through hole 156 is in fluid communication with an inlet 166 of the nozzle unit 151. A coolant fluid supply system (not shown) is arranged to supply pressurized coolant fluid to the inlet 166 of the nozzle unit 151 via the first coolant fluid passage 161, the second coolant fluid passage 162 and at least a portion of the through hole 156. According to an example the nozzle unit 151 is arranged to distribute pressurized coolant fluid through at least one coolant fluid outlet 190 towards the cutting insert 130. According to an example the nozzle unit 151 is arranged to distribute pressurized coolant fluid through at least one coolant fluid outlet 190 towards the insert seat 105. According to an example the nozzle unit 151 is arranged to distribute pressurized coolant fluid through at least one coolant fluid outlet 190 towards the metal workpiece.

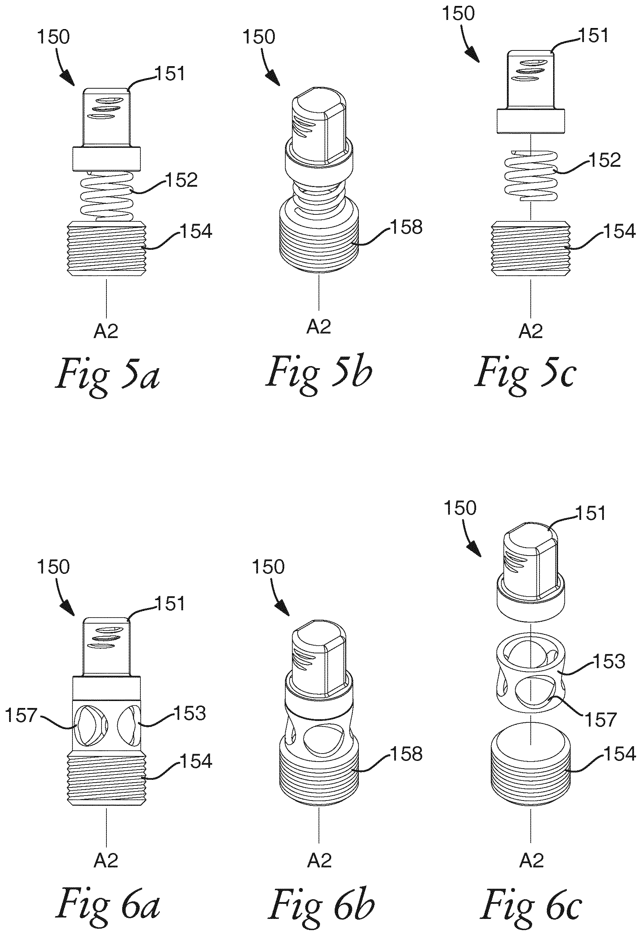

The coolant nozzle configuration 150 is mounted in the through hole 156. The coolant nozzle configuration 150 is depicted in greater detail with reference to Figure 5a-c and Figure 6a-c. The coolant nozzle configuration 150 comprises three parts, namely a nozzle unit 151, an intermediate member 152 and a sealing member 154. The nozzle unit 151 is also referred to as nozzle head. The nozzle unit 151 is arranged to at least partly protrude from the top surface 114 in a mounted state of the nozzle unit 151. A protruding height H of the protruding top portion of the nozzle unit 151 is measured from the top surface 114 to a top surface 159 of the protruding nozzle unit 151.

The intermediate member 152 is according to this example resilient. The intermediate member 152 is in the form of a resilient or elastic helical spring. The intermediate member may alternatively be rigid, which is further depicted with reference to Figures 6a-c.

The helical spring 152 has a longitudinal extension and is, in the mounted state of the nozzle unit 151, in contact with the nozzle unit 151 at one end thereof. The helical spring 152 is, in the mounted state of the nozzle unit 151, in contact with the sealing member 154 at the other end thereof.

The helical spring 152 is resilient and arranged to pre-stress the nozzle unit 151 toward the mounted state of the nozzle unit 151. Hereby the helical spring 152 is arranged to hold the nozzle unit 151 in position in the mounted state of the nozzle unit 151.

The sealing member 154 is arranged to seal the through hole 156 at the bottom surface 113 in a fluid tight manner. According to an example the sealing member 154 has an external thread 158. The through hole 156 has an internal thread 168 at a close proximity of the bottom surface 113. The sealing member 154 is arranged to seal the through hole 156 at the bottom surface 113 in a fluid tight manner by screw connection of the external thread 158 of the sealing member 154 with the internal thread 168 of the through hole 156. According to an example there is provided an additional sealing member, such as an O-ring, arranged about the sealing member 154. Hereby enhanced sealing efficiency is achieved. The additional sealing member is arranged at a close proximity of the bottom surface 113. The additional sealing member may consist of rubber or a plastic material.

According to an example the sealing member 154 has a hole 155 in a bottom surface thereof. The hole 155 has a polygonal cross-sectional area seen in a bottom view. The hole 155 is arranged to receive a tool for mounting the sealing member 154 in the through hole 156 by screwing the sealing member 154 into the through hole 156.

The nozzle unit 151 is introducible through an opening in the bottom surface 113 into the through hole 156. The nozzle unit 151 is hereby axially movable in the through hole 156 to the mounted state of the nozzle unit 151. An operator of the turning machine may introduce the nozzle unit 151 manually and put the nozzle unit 151 in position at the top surface 114 by moving the nozzle unit 151 to be in contact with an internal abutment surface 171 of the trough hole 156. Subsequently the operator can introduce the intermediate member 152 and lastly mount the sealing member 154 so as to mount the nozzle unit 151 in the mounted state of the nozzle unit 151.

The nozzle unit 151 is axially movable by being slidable along the longitudinal center axis A2 of the through hole 156 towards and away from the mounted state. Hereby an operator of the turning tool 100 can manually press down the protruding portion of the nozzle unit 151 into the through hole 156 and easily attach/release the first turning tool body 110 to/from the second turning tool body 120 by means of the screws 116. The axially directed movement, in one direction, is achieved by compressing the resilient intermediate member 152 by applying an external force to the nozzle unit 151. The axially directed movement, in the other direction, is achieved by removing the applied external force to the nozzle unit 151 whereby the intermediate member 152 is prestressing the nozzle unit 151 toward the mounted state of the nozzle unit 151.

The nozzle unit 151 has a shoulder 185 and the through hole 156 has an abutment surface 171, and wherein the shoulder 185 abuts against the abutment surface 171 when the nozzle unit 151 is in the mounted state of the nozzle unit 151. The shoulder 185 of the nozzle unit 151 is radially protruding at a bottom portion of the nozzle unit 151. The shoulder 185 has an upward facing surface 186 which is arranged to be in fluid tight contact with the abutment surface 171. The abutment surface 171 is a downward facing surface. The abutment surface 171 is a downward facing surface of the top surface 114 in the mounted state of the nozzle unit 151.

The nozzle unit 151 and the through hole 156 at the top surface 114 are such dimensioned that, when the nozzle unit 151 is in the mounted state, rotational movement of the nozzle unit 151 about the longitudinal center axis A2 of the through hole 156 is prevented. Hereby a rotational preventing mechanism is provided. Hereby the nozzle unit 151 is locked in a rotational direction as well as in an axial direction. This advantageously provides a reliable distribution of coolant fluid during turning operations.

A longitudinal central axis A2 of the coolant nozzle configuration 150 is extending orthogonal to the reference plane RP. The longitudinal central axis A2 of the coolant nozzle configuration 150 is extending parallel with the longitudinal central axis A3 of the screw 135.

The design of the nozzle unit 151 may be adapted to various factors. Examples of such factors may be dimensions of the cutting insert 130, properties of the cutting insert 130, desired cutting depth of the workpiece, properties of the workpiece, orientation of the cutting edges of the cutting insert 130, etc.

Figure 5a-c schematically illustrates a coolant nozzle configuration 150 according to an example. Herein the coolant nozzle configuration 150 comprises a nozzle unit 151, an intermediate member 152 and a sealing member 154. According to this example the intermediate member 152 is a resilient intermediate member in the form of a spring coil. The coolant nozzle configuration 150 is arranged to be accommodated in the through hole 156 according to what is depicted herein. The resilient intermediate member 152 is arranged to pre-stress the nozzle unit 151 toward the mounted state of the nozzle unit 151.

According to this example the coolant nozzle configuration 150 has three separate parts, namely the nozzle unit 151, the intermediate member 152 and the sealing member 154. According to another example the sealing member 154 and the intermediate member 152 are fixedly secured and the nozzle unit 151 is not fixedly secured to the intermediate member 152. According to yet another example the nozzle unit 151 and the intermediate member 152 are fixedly secured and the sealing member 154 is not fixedly secured to the intermediate member 152. According to one example two parts of the coolant nozzle configuration are attached to each other by means of soldering. According to one example the two parts are attached to each other by means of an adhesive. The adhesive is preferably heat resistant. The adhesive may comprise glue.

When mounting the coolant nozzle configuration 150 according to this example various tools may be used for sake of simplicity. For an example a pair of tweezers may be used by the operator to manually put the parts of the coolant nozzle configuration 150 in place.

Figure 6a-c schematically illustrates a coolant nozzle configuration 150 according to an example. Herein the coolant nozzle configuration 150 comprises a nozzle unit 151, an intermediate member 153 and a sealing member 154. According to this example the intermediate member 153 is a rigid intermediate member in the form of a cylindrical hollow element provided with at least one through hole 157 in a peripherical surface thereof for allowing a coolant fluid to flow into the inlet 165 of the through hole 156, wherein the inlet 166 of the nozzle unit 151 is in fluid communication with a hollow space of the cylindrical hollow element. The coolant nozzle configuration 150 is arranged to be accommodated in the through hole 156 according to what is depicted herein. The sealing member 154 is arranged to, in a mounted state, press the rigid intermediate member 153 onto the nozzle unit 151 toward the mounted state of the nozzle unit 151.

According to this example the coolant nozzle configuration 150 has three separate parts, namely the nozzle unit 151, the intermediate member 153 and the sealing member 154. According to another example the sealing member 154 and the intermediate member 153 are fixedly secured and the nozzle unit 151 is not fixedly secured to the intermediate member 153. According to yet another example the nozzle unit 151 and the intermediate member 153 are fixedly secured and the sealing member 154 is not fixedly secured to the intermediate member 153. According to one example two parts of the coolant nozzle configuration are attached to each other by means of soldering. According to one example the parts are attached to each other by means of an adhesive. The adhesive is preferably heat resistant. The adhesive may comprise glue.

When mounting the coolant nozzle configuration 150 according to this example various tools may be used for sake of simplicity. For an example a pair of tweezers may be used by the operator to manually put the parts of the coolant nozzle configuration 150 in place.

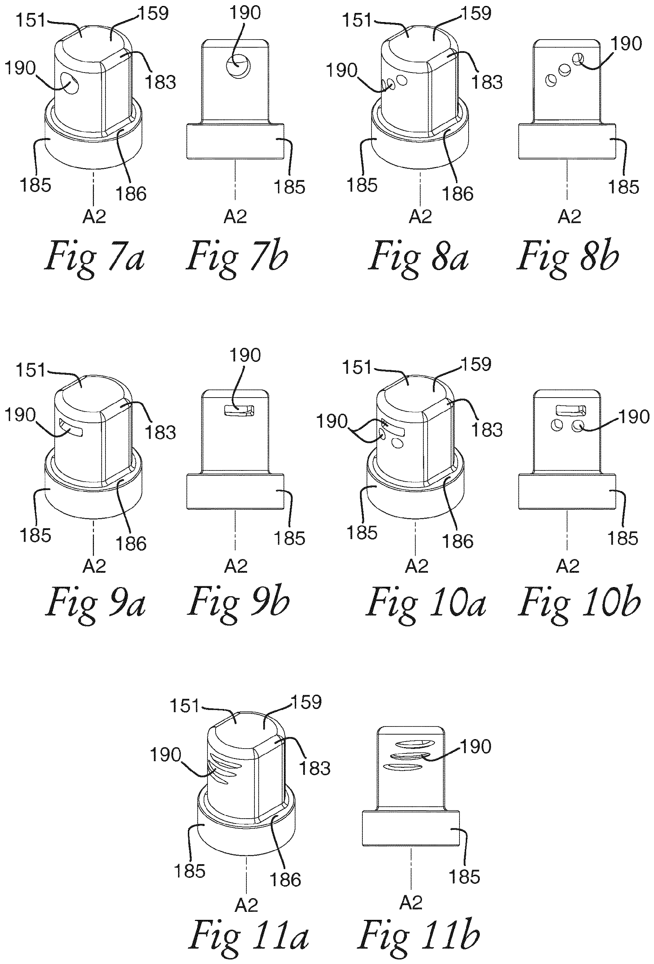

With reference to Figure 7a and Figure 7b a first example of the nozzle unit 151 is illustrated. The longitudinal central axis A2 of the nozzle unit 151 is illustrated. The nozzle unit 151 has a shoulder 185 at a bottom portion thereof. The shoulder 185 of the nozzle unit 151 is radially protruding at a bottom portion of the nozzle unit 151. The shoulder 185 has an upward facing surface 186 which is arranged to be in fluid tight contact with the downward facing surface 171 of the top surface 114 in the mounted state of the nozzle unit 151. The nozzle unit 151 has a top surface 159. According to an example the top surface of the nozzle unit 151 is flat and oriented orthogonally to the longitudinal central axis A2 of the nozzle unit 151. The top surface 159 is connected to a peripherical rounded edge 183. The rounded edge 183 may facilitate insertion of the nozzle unit 151 through the top surface 114 when mounting the nozzle unit 151 to the mounted state of the nozzle unit 151. The previous description relating to Figure 7a and 7b is applicable to the following examples of nozzle units 151, namely according to Figure 8a-b, 9a-b, 10a-b, 11a-b and 12a-b.

According to the first example of the nozzle unit 151 only one coolant fluid outlet 190 is provided. The coolant fluid outlet 190 has a circular cross-section seen in a front view. Hereby distribution of coolant fluid from the coolant fluid outlet 190 may be directed towards a particular limited portion of the cutting insert 130, e.g. a cutting nose of the cutting insert 130. Hereby distribution of coolant fluid from the coolant fluid outlet 190 may be directed towards a particular limited portion in a close proximity of the cutting insert 130, e.g. at a portion of the first turning tool body 110 adjacent to the insert seat side surface 132a or 132b.

With reference to Figure 8a and Figure 8b a second example of the nozzle unit 151 is illustrated. According to the second example of the nozzle unit 151 three coolant fluid outlets 190 are provided. The coolant fluid outlets 190 has circular cross-sections seen in a front view. The three coolant fluid outlets 190 are separated in a vertical direction, i.e. the coolant fluid outlets 190 are mutually separated by a distance along the longitudinal central axis A2. The three coolant fluid outlets 190 are also separated in a horizontal direction, i.e. the coolant fluid outlets 190 are mutually separated by a distance in a rotational direction of the longitudinal central axis A2. Hereby distribution of coolant fluid from the three coolant fluid outlets 190 may be directed towards several different particular limited portions of the cutting insert 130, e.g. a cutting nose of the cutting insert 130 and portions of a cutting edge of the cutting insert 130. Hereby distribution of coolant fluid from the coolant fluid outlets 190 may be directed towards several separated portions in a close proximity of the cutting insert 130, e.g. at portions of the first turning tool body 110 each being located adjacent to the insert seat side surface 132a or 132b.

With reference to Figure 9a and Figure 9b a third example of the nozzle unit 151 is illustrated. According to the third example of the nozzle unit 151 only one coolant fluid outlet 190 is provided. The coolant fluid outlet 190 has a rectangular cross-section seen in a front view. Hereby distribution of coolant from the coolant fluid outlet 190 may be directed towards an extended portion of the cutting insert 130, e.g. a portion comprising the cutting nose of the cutting insert 130 and a portion of a cutting edge of the cutting insert 130. Hereby distribution of coolant fluid from the coolant fluid outlet 190 may be directed towards an elongated portion in a close proximity of the cutting insert 130, e.g. at an elongated portion of the first turning tool body 110 being located adjacent to the insert seat side surface 132a or 132b.

With reference to Figure 10a and Figure 10b a fourth example of the nozzle unit 151 is illustrated. According to the fourth example of the nozzle unit 151 three coolant fluid outlets 190 are provided. Two coolant fluid outlets 190 have circular cross-sections seen in a front view. One coolant fluid outlet 190 has a rectangular cross-section seen in a front view. The two circular coolant fluid outlets 190 and the rectangular coolant fluid outlet 190 are separated in a vertical direction, wherein the two circular coolant fluid outlets 190 and the rectangular coolant fluid outlet 190 are separated by a distance along the longitudinal central axis A2. The rectangular coolant fluid outlet 190 is arranged closer to the top surface 159 compared to the two circular coolant fluid outlets 190. The two circular coolant fluid outlets 190 are also separated in a horizontal direction, i.e. the coolant fluid outlets 190 are mutually separated by a distance in a rotational direction of the longitudinal central axis A2. Hereby distribution of coolant fluid from the circular coolant fluid outlets 190 may be directed towards at least one particular limited portion of the cutting insert 130, e.g. a cutting nose of the cutting insert 130 and a portion of a cutting edge of the cutting insert 130. Hereby distribution of coolant fluid from the rectangular coolant fluid outlet 190 may be directed towards an elongated portion in a close proximity of the cutting insert 130, e.g. at an elongated portion of the first turning tool body 110 being located adjacent to the insert seat side surface 132a or 132b.

With reference to Figure 11a and Figure 11b a fifth example of the nozzle unit 151 is illustrated. According to the fifth example of the nozzle unit 151 three coolant fluid outlets 190 are provided. The coolant fluid outlets 190 have elliptical cross-sections seen in a front view. The three coolant fluid outlets 190 are separated in a vertical direction, i.e. the coolant fluid outlets 190 are mutually separated by a distance along the longitudinal central axis A2. The three elliptical coolant fluid outlets 190 are also separated in a horizontal direction, i.e. the coolant fluid outlets 190 are mutually separated by a distance in a rotational direction of the longitudinal central axis A2. Hereby distribution of coolant flow from the three elliptical coolant fluid outlets 190 may be directed towards several different elongated portions of the cutting insert 130, e.g. an elongated portion comprising a cutting nose of the cutting insert 130 and a portion of a cutting edge of the cutting insert 130. Hereby distribution of coolant flow from the coolant fluid outlet 190 may be directed towards several elongated portions located in a close proximity of the cutting insert 130, e.g. at portions of the first turning tool body 110 each being located adjacent to the insert seat side surface 132a or 132b.

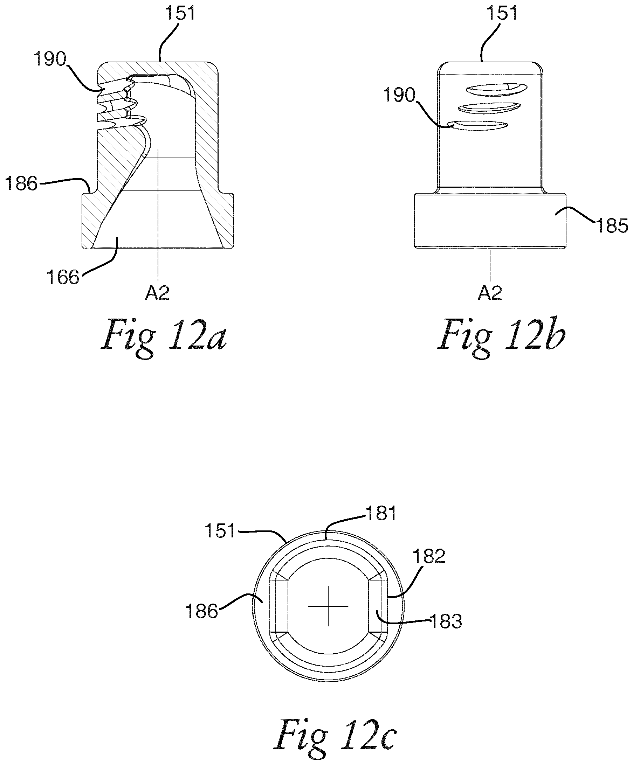

With reference to Figures 12a-c an example of the nozzle unit 151 is illustrated. The nozzle unit 151 has an inlet 166 provided at a bottom surface. The nozzle unit 151 has an internal hollow space between the inlet 166 at the bottom surface and coolant fluid outlets 190 at a top portion of the nozzle unit 151. The cross-sectional area of the hollow space is varying along the longitudinal center axis A2. The cross-sectional area of the hollow space has a smallest value at a position of the longitudinal center axis between the bottom surface of the nozzle unit 151 and the top surface 159 of the nozzle unit 151.

The nozzle unit 151 has a shoulder 185. The shoulder 185 has an upward facing surface 186 which is arranged to be in fluid tight contact with a downward facing surface 171 of the top surface 114 in the mounted state of the nozzle unit 151.

The nozzle unit 151 has a number of coolant fluid outlets 190. According to this example the nozzle unit 151 has three coolant fluid outlets 190. The coolant fluid outlets 190 have an elliptical shape seen in a front view (Fig. 12b). The three coolant fluid outlets 190 are separated in a vertical direction, i.e. the coolant fluid outlets 190 are mutually separated by a distance along the longitudinal central axis A2. The three elliptical coolant fluid outlets 190 are also separated in a horizontal direction, i.e. the coolant fluid outlets 190 are mutually separated by a distance in a rotational direction of the longitudinal central axis A2.

A top portion of the nozzle unit 151 is, seen in a top view, stadium shaped. The nozzle unit 151 has two curved side surfaces 181. The nozzle unit 151 has two planar side surfaces 182 provided between the curved surfaces 181. The two curved surfaces 181 and the two planar surfaces 182 are located between the top surface 159 and the upward facing surface 186 of the shoulder 185.

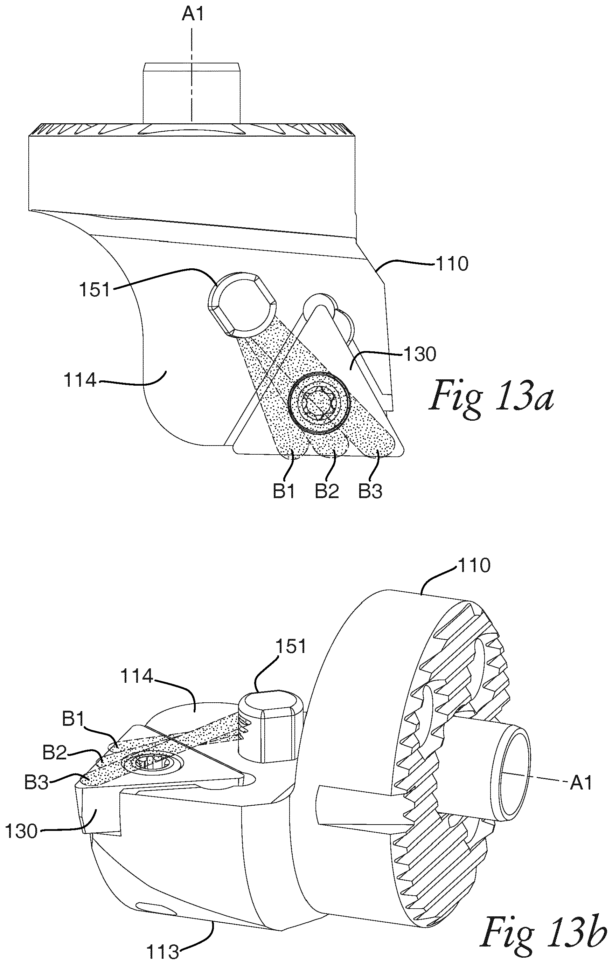

With reference to Figure 13a and Figure 13b the first turning tool body 110 is illustrated in a top view and a perspective view, respectively. According to this example the coolant nozzle unit 151 is configured according to the fifth example depicted with reference to Figure 11a and Figure 11b. Distribution of coolant fluid is hereby provided such that a relatively large portion of a cutting edge of the cutting insert 130 is hit. A first coolant fluid outlet 190 is arranged to distribute a first coolant fluid beam B1. The first coolant fluid beam B1 is directed to hit a first portion of the cutting insert 130. A second coolant fluid outlet 190 is arranged to distribute a second coolant fluid beam B2. The second coolant fluid beam B2 is directed to hit a second portion of the cutting insert 130. A third coolant fluid outlet 190 is arranged to distribute a third coolant fluid beam B3. The third coolant fluid beam B3 is directed to hit a third portion of the cutting insert 130. The first, second and third portions of the cutting insert 130 may be at least partly overlapping. Cooling affect by means of said coolant fluid is thus effectively provided along a relatively long distance of the cutting edge of the cutting insert 130.

All coolant fluid outlets 190 of the nozzle unit 151 in fluid communication with the through hole 156 via the nozzle unit inlet 166 are not necessarily directed towards the cutting insert 130 or one or more cutting edges of the cutting insert 130. Some coolant fluid outlets 190 may be arranged to direct coolant fluid toward other regions of the first turning tool body 110, for example to an area in the vicinity of the cutting insert 130. Coolant fluid may also be directed partly rearwards, i.e. in a direction away from the front end FE towards the rear end RE via coolant fluid outlets 190, such that coolant fluid emerging therefrom hits surface portions of the first turning tool body 110 at a distance from the cutting insert 130. Coolant fluid directed in such a way may improve the removal of metal chips produced during turning operations.

According to one example at least one coolant fluid outlet 190 of the coolant nozzle unit 151 is arranged to direct coolant fluid so that chip removal is improved. According to this example coolant fluid is not even necessarily arranged to directly hit any part of the first turning tool body 110, but is for the purpose of chip removal.

## Claims

1. A turning tool (100) for metal cutting comprising:
- a tool body (110; 110, 120) having a top surface (114) and a bottom surface (113);
- an insert seat (105) positioned at a front (FE) end of the top surface (114), which insert seat (105) is arranged to accommodate a cutting insert (130);
- a clamping mechanism (135), which is arranged to hold the cutting insert (130) in the insert seat (105);
- a nozzle unit (151) being arranged for directing a coolant fluid towards the cutting insert (130) when the cutting insert (130) is mounted in the insert seat (105),
**characterized in that**
- a through hole (156) which extends from the top surface (114) to the bottom surface (113);
- the through hole (156) is positioned separately from the clamping mechanism (135); wherein
- the nozzle unit (151), which is separate from the clamping mechanism (135), and removably received in the through hole (156), and which has a mounted state, wherein, when the nozzle unit (151) is in the mounted state, a top portion of the nozzle unit (151) protrudes from the top surface (114).

2. The turning tool (100) according to claim 1, wherein the through hole (156) has an inlet (165) for receiving coolant fluid and the nozzle unit (151) has an inlet (166) for receiving coolant fluid, which inlet (166) is in fluid communication with the through hole (156).

3. The turning tool (100) according to claim 1 or 2, wherein a sealing member (154) is arranged to seal the through hole (156) at the bottom surface (113) in a fluid tight manner.

4. The turning tool (100) according to claim 3, wherein the sealing member (154) has an external thread (158) and the through hole (156) has an internal thread (168) at a close proximity of the bottom surface (113), wherein the sealing member (154) is arranged to seal the through hole (156) at the bottom surface (113) in a fluid tight manner by screw connection of the external thread (158) of the sealing member (154) with the internal thread (168) of the through hole (156).

5. The turning tool (100) according to claim 3 or 4, wherein an intermediate member (152; 153) has a longitudinal extension and, in the mounted state of the nozzle unit (151), is in contact with the nozzle unit (151) at one end thereof and in contact with the sealing member (154) at the other end thereof.

6. The turning tool (100) according to claim 5, wherein the intermediate member (152) is resilient and arranged to pre-stress the nozzle unit (151) toward the mounted state of the nozzle unit (151).

7. The turning tool (100) according to claim 6, wherein the resilient intermediate member (152) is a helical spring being arranged to pre-stress the nozzle unit (151) toward the mounted state of the nozzle unit (151).

8. The turning tool (100) according to claim 5, wherein the intermediate member (153) is rigid.

9. The turning tool (100) according to claim 8, wherein the rigid intermediate member (153) is a cylindrical hollow element provided with at least one through hole (157) in a peripherical surface thereof for allowing a coolant fluid flow into the inlet (165) of the through hole (156), wherein an inlet (166) of the nozzle unit (151) is in fluid communication with a hollow space of the cylindrical hollow element.

10. The turning tool (100) according to any one of the preceding claims, wherein an angle (α) between a longitudinal central axis (A2) of the through hole (156) and a plane (RP) defined by a bottom surface (131) of the insert seat (105) is 45-90 degrees.

11. The turning tool (100) according to any one of the preceding claims, wherein an angle (α) between a longitudinal central axis (A2) of the through hole (156) and a plane (RP) defined by a bottom surface (131) of the insert seat (105) is preferably 90 degrees.

12. The turning tool (100) according to any one of the preceding claims, wherein the nozzle unit (151) is additive manufactured, having a protruding height (H) measured in a direction parallel to a longitudinal central axis of the coolant nozzle, which protruding height (H) is between 5mm and 10mm.

13. The turning tool (100) according to any one of the preceding claims, wherein the nozzle unit (151) has a number of coolant fluid outlets (190), each configured to directly or indirectly direct pressurized coolant fluid toward at least one predetermined portion of the cutting insert (130) when mounted in the insert seat (105).

14. The turning tool (100) according to any one of the preceding claims, wherein the nozzle unit (151) is introducible through an opening in the bottom surface (113), wherein the nozzle unit (151) is axially movable in the through hole (156) to the mounted state of the nozzle unit (151).

15. The turning tool (100) according to claim 5, wherein the nozzle unit (151) is axially movable by being slidable along a longitudinal center axis of the through hole (156) towards and away from the mounted state.

16. The turning tool (100) according to any one of the preceding claims, wherein the nozzle unit (151) has a shoulder (185) and the through hole (156) has an abutment surface (171), and wherein the shoulder (185) abuts against the abutment surface (171) when the nozzle unit (151) is in the mounted state.

17. The turning tool (100) according to any one of the preceding claims, wherein the nozzle unit (151) and the through hole (156) at the top surface (114) are such dimensioned that, when the nozzle unit (151) is in the mounted state, rotational movement of the nozzle unit (151) about a longitudinal center axis (A2) of the through hole (156) is prevented.
